# EUROPÄISCHE PATENTANMELDUNG

(11) **EP 3 246 865 A1**
(43) Veröffentlichungstag der Anmeldung: **22.11.2017**
(21) Anmeldenummer: 16204208.9
(22) Anmeldetag: 15.12.2016
(51) Int. Cl.: G06Q 20/32

(54) **VERFAHREN UND ANORDNUNG ZUR ÜBERMITTLUNG VON TRANSAKTIONSDATEN UNTER NUTZUNG EINES ÖFFENTLICHEN DATENNETZES**

(30) Priorität: 19.05.2016 DE 102016109209
(71) Anmelder: Rubean AG, 81379 München (DE)
(72) Erfinder: Geupel, Hermann, 81925 München (DE)
(74) Vertreter: Heinze, Ekkehard

(57) **Zusammenfassung**

Verfahren zur Übermittlung von Transaktionsdaten unter Nutzung eines öffentlichen Datennetzes, mit den Schritten:
a) Übermittlung primärer Transaktionsdaten von einer Anbieter-Datenbasis über das öffentliche Datennetz an ein an das Datennetz angeschlossenes Anzeigegerät und lokale optische und/oder akustische Anzeige der primären Transaktionsdaten an diesem, insbesondere optisch auf einer angezeigten Anbieter-Website als Barcode oder QR-Code,
b1) Aufnahme der Anzeige und Erzeugung einer primären Transaktionsdatei in einem Nutzerendgerät eines Zugangsnetzes oder
b2) Aufnahme der Anzeige und Erzeugung einer primären Transaktionsdatei in einem Aufnahmegerät und anschließendes Übertragen der primären Transaktionsdatei an ein Nutzerendgerät eines Zugangsnetzes, über Mittel zur drahtlosen Nahbereichs-Datenübertragung des Aufnahmegerätes und Nutzerendgerätes,
c) Verarbeitung der primären Transaktionsdatei auf dem Nutzerendgerät zur Extraktion mindestens eines Teils der Transaktionsdaten und Erzeugung einer Extraktdatei,
d) Eingabe eines Autorisierungsdatensatzes, insbesondere einer PIN, einer als SmartCard konfigurierten und mit Mitteln zur drahtlosen Nahbereichs-Datenübertragung ausgerüsteten Debit- oder Kreditkarte am Nutzerendgerät und Verknüpfung des Autorisierungsdatensatzes mit der Extraktdatei,
e1) Übermittlung der Extraktdatei und des verknüpften Autorisierungsdatensatzes vom Nutzerendgerät an die mit diesem drahtlos verbundene Smartcard oder
e2) interne Übergabe der Extraktdatei und des verknüpften Autorisierungsdatensatzes an die SmartCard-Komponente im Nutzerendgerät,
f) Prüfung der Extraktdatei in Verbindung mit dem Autorisierungsdatensatz durch einen Prozessor der SmartCard oder SmartCard-Komponente aufgrund von dort gespeicherten Vergleichsdaten und, bei Korrektheit, Ausgabe einer Korrektheit-Bestätigungsnachricht an das Nutzerendgerät bzw. intern im Nutzerendgerät,
g) Erzeugung einer sekundären Transaktionsdatei, die die primären Transaktionsdaten und Nutzerdaten umfasst, im Nutzerendgerät aufgrund der Bestätigungsnachricht
h) Übermittlung der sekundären Transaktionsdatei vom Nutzerendgerät über das Zugangsnetz an einen Zugangs-Server im Datennetz,
l) Abholen oder Empfang einer Transaktions-Bestätigungsnachricht vom Zugangs-Server durch eine bzw. an einer Anbieter-Empfangseinrichtung und insbesondere optische und/oder akustische Anzeige der Nachricht auf der Anbieter-Website.

## Beschreibung

Die Erfindung betrifft ein Verfahren und eine Anordnung zur Übermittlung von Transaktionsdaten unter Nutzung eines öffentlichen Datennetzes. Im Kern betrifft sie ein Verfahren und System zur Autorisierung von Onlinezahlungen.

In Onlineshops stehen heute oft mehrere Verfahren zur Auswahl, um sich im Rahmen der Autorisierung einer Onlinezahlung zu authentifizieren:
- mit Vorkasse, Sofortüberweisung oder PIN und TAN basierte OnlineBanking-Verfahren, bei denen der Kunde seine Onlinebanking PIN parat haben und die TAN handhaben muss
- mit AppiePay und Selfie-Pay (http://www.welt.de/finanzen/verbraucher/article152595657/Mastercard-Kunden-koennen-bald-per-Selfie-bezahlen.html biometrische Verfahren, die zu fälschlichen Abweisungen führen können
- mit Paypal ein technisch nicht so sicheres Verfahren, mit der ausschließlichen Prüfung eines Passwortes.

Die vorliegende Erfindung stellt sich die Aufgabe, ein für den Benutzer einfacheres und zugleich sicheres Verfahren und System zur Autorisierung von Onlinezahlungen aufzuzeigen.

Diese Aufgabe wird in ihrem Verfahrensaspekt durch ein Verfahren mit den Merkmalen des Anspruchs 1 bzw. des Anspruchs 2 und in ihrem Vorrichtungsaspekt durch Anordnungen mit den Merkmalen des Anspruchs 12, des Anspruchs 14 bzw. des Anspruchs 15 gelöst. Zweckmäßige Fortbildungen des Erfindungsgedankens sind Gegenstand der jeweiligen abhängigen Ansprüche.

Die vorliegende Erfindung schafft damit ein sicheres und nutzerfreundliches Verfahren und System zur Autorisierung einer Transaktion mittels Smartcard und Smartphone.

Die gestellte Aufgabe löst die Erfindung durch technische Weiterentwicklung des Verfahrens, das Nutzer grundsätzlich vom Bezahlen im Geschäft kennen. Mit einer Bankkarte und der Eingabe der passenden PIN weist sich der Benutzer dort an einem Bezahlterminal aus und bestätigt die zu zahlende Kaufpreissumme. Auf den Kauf einer Ware in einem Internetshop bezogen, wird die Funktion des Bezahlterminals erfindungsgemäß vom Smartphone des Benutzers abgedeckt.

Das erfindungsgemäße Verfahren und System mittels der Anbindung NFC fähiger Debit- und Kreditkarten an ein NFC fähiges Endgerät (Smartphone) des Kunden erzielt die folgenden Vorteile:
- Es realisiert ein einfaches Bezahlverfahren: Der Kunde braucht zum Bezahlen im Webshop nur seine NFC fähige Bankkarte an das Smartphone halten und seine Karten-PIN eingeben, die er sich sowieso für andere Geschäftsvorfälle wie das Bezahlen im Geschäft oder Geldabheben merken muss. Der Prozess ist dem Kunden sehr vertraut und damit höchst einfach für ihn.
- Es ist sicher und kosteneffizient: Durch den gesicherten Mobile App Installationsprozess und die geschützte Zahlungsbetragsanzeige und PIN Eingabe steht dem Kunden in Form seines eigenen Smartphones eine neue Art von Kassenterminal für Online- und mobile Einkäufe zur Verfügung. In diesem Fall einer PIN geprüften Girocard oder Kreditkartenzahlung haftet nach traditionellem Recht ggfs. der Kunde für einen Identitätsdiebstahl, was sich letztendlich in niedrigeren Gebühren für den Händler ausdrückt.

In einer Ausführung der Erfindung sind weitere Schritte im Datennetz vorgesehen, und zwar
die Weiterleitung der sekundären Transaktionsdatei vom Zugangs-Server an einen Transaktions-Server oder ein Serversystem im Datennetz,
die Erzeugung einer Transaktions-Bestätigungsnachricht nach Verarbeitung der sekundären Transaktionsdatei zur Ausführung der Transaktion im Transaktions-Server oder Serversystem und
das Abholen der Transaktions-Bestätigungsnachricht durch eine Anbieter-Software oder aktive Aussendung der Transaktions-Bestätigungsnachricht vom Transaktions-Server oder Serversystem an die Anbieter-Empfangseinrichtung.

Während die erfindungsgemäß vorgesehene Autorisierungs-Bestätigungsnachricht zunächst bestätigt, dass die vorgesehene Transaktion seitens des Nutzers und seiner Bank autorisiert ist, kann die eigentliche Transaktion zu einem späteren Zeitpunkt stattfinden und wird auch erst dann als tatsächlich ausgeführte Transaktion gemäß den oben genannten Schritten bestätigt. Wird die Transaktion aus irgendwelchen Gründen nicht ausgeführt, entfallen diese Schritte selbstverständlich, bzw. sie werden durch Nachrichten ersetzt, die die Nicht-Ausführung der Transaktion (und ggfs. deren Gründe) kommunizieren.

In einer weiteren Ausführung umfasst das Verfahren einen weiteren Schritt der Übermittlung der Autorisierungs-Bestätigungsnachricht über den Zugangs-Server und das Zugangsnetz an das Nutzerendgerät des Zugangsnetzes und Anzeige auf diesem. Hiermit wird optional die gültige Autorisierung dem Nutzer (zusätzlich oder auch alternativ zur Anzeige auch über die Website des Anbieters) auf seinem Smartphone oder Tablet angezeigt.

In einer weiteren Ausführung der Erfindung ist das öffentliche Datennetz ein IP-Netz und das Anzeigegerät eine Anzeigeeinrichtung eines Computers 0, deren Anzeige-Inhalt von einer Webseite 1 geladen wird, in der insbesondere ein Plug-In-Softwaremodul zur Ausführung der Schritte a) und l) installiert ist. Insbesondere ist hierbei vorgesehen, dass die Transaktionsdaten im Schritt a) optisch als Barcode oder QR-Code angezeigt werden.

Weiterhin ist insbesondere das Zugangsnetz ein Mobilfunknetz oder WLAN und das Nutzerendgerät ein Smartphone oder Tablet, in dem eine Mobile App zur Ausführung insbesondere der Schritte c) - e2) und g) installiert ist. Die Aufnahme der mittels des Anzeigegerätes dargebotenen Anzeige ist, abhängig von der Art der Anzeige, insbesondere ein Scannen einer optischen Anzeige mittels einer eingebauten Kamera des Nutzerendgerätes oder auch einer separaten Kamera; es kann sich aber grundsätzlich auch um eine Tonaufzeichnung einer gesprochenen Zeichenfolge oder anderen akustischen Anzeige handeln.

Für den wesentlichen Datenaustausch zwischen Nutzerendgerät und Smartcard ist eine Ausführung vorteilhaft, in der das Nutzerendgerät und die Smartcard über das Near Field Communication, NFC, Protokoll und den EMV-Standard für chipbasierte Zahlungskarten bidirektional kommunizieren.

Weiterhin ist in der Praxis vorgesehen, dass im Schritt c der Autorisierungsdatensatz eine PIN der Kreditkarte oder Girocard (Bankkarte) aufweist. Alternativ ist grundsätzlich auch ein Datensatz physiologischer Nutzerdaten (Fingerabdruck, Retinabild, Stimmprofil o.ä.) einsetzbar, dies birgt jedoch latent ein höheres Abweisungs-Risiko für die angestrebte Transaktion.

Der Teil der Transaktionsdaten, in den Ansprüchen Extraktdatei genannt, welcher der Smartcard (Bankkarte) zusammen mit der PIN übermittelt wird, kann der Transaktionsbetrag sein. Wenn der auf der Smartcard verzeichnete Kreditrahmen größer als der Transaktionsbetrag ist, hinterlegt die Smartcard den Differenzbetrag als neuen Kreditrahmen. Eine Kommunikation mit dem Serversystem entfällt in diesem Fall. Der Bestätigungsserver wird mittels des Transaktionsdatensatzes allerdings von der freigegebenen Transaktion benachrichtigt.

In einer weiteren aus derzeitiger Sicht bevorzugten Ausführung ist vorgesehen, dass das Nutzerendgerät mit dem Zugangsserver und Serversystem über das nexo Protokoll (http://www.nexo-standards.org/sites/default/files/nexo%20whitepaper%20-%20final%20edited%20version.pdf) kommuniziert.

Während aus aktueller Sicht die wichtigste Konfiguration im Rahmen der Erfindung eine gegenüber dem Nutzerendgerät separate Smartcard beinhaltet, schließt die Erfindung auch die Option ein, dass das Nutzerendgerät intern eine Smartcard-Komponente oder -Funktionalität aufweist. Dann ist insbesondere vorgesehen, dass im Schritt e2) die Mobile App den Autorisierungsdatensatz im Vergleich mit einem Secure Element auf einer SIM-Karte oder vergleichbaren Komponenten des Nutzerendgerätes prüft.

In einer weiteren Ausgestaltung des Verfahrens wird zur Ausgabe der PIN der Kreditkarte oder Girocard ein proprietäres Eingabefeld auf dem Touchscreen des Nutzerendgerätes erzeugt, wobei insbesondere die Position des Eingabefeldes auf dem Touchscreen für jeden Eingabevorgang oder für einzelne Ziffern-Eingaben eines Eingabevorganges spezifisch vorgegeben wird.

Im Interesse hoher Sicherheit ist des Weiteren eine Ausführung bevorzugt, bei der die im Nutzerendgerät ausgeführten Schritte im Rahmen eines Trusted Execution Environment, TEE, durch einen Prozessor des Nutzerendgerätes in einem sicheren Modus ausgeführt werden, wobei die Umschaltung in den sicheren Modus durch die Mobile App bewirkt wird. Hierbei ist insbesondere vorgesehen, dass die Mobile App sich gegenüber dem Prozessor des Nutzerendgerätes durch ein Public Key Verfahren als sichere Mobile App authentifiziert.

In einer weiteren Ausführung ist das Verfahren derart ausgestaltet, dass die Schritte k) und m) mindestens teilweise über eine Bestätigungs-Funktionalität des Zugangsservers unabhängig vom aktuellen Betriebszustand des Nutzerendgerätes ausgeführt werden.

In einer weiteren Ausgestaltung des Verfahrens wird die Authentizität der Mobile App gegenüber dem Nutzer dadurch nachgewiesen, dass das Plug-in Softwaremodul dem Nutzer eine Warnmeldung zeigt, wenn das Plug-in eine bestimmte Zeit nach Darstellung der Transaktionsdaten auf der Webseite keine Rückmeldung vom Bestätigungsserver erhalten hat, dass die Transaktionsdaten von einer authentischen Mobile App erfasst wurden.

Nur über den eben beschriebenen Informationskreislauf kann der Nutzer sicher sein, dass die Mobile App auf seinem Nutzerendgerät nicht nur oberflächlich so erscheint wie eine echte Mobile App, sondern auch so wirkt. Technisch kann die Mobile App ihre Echtheit gegenüber dem Bestätigungsserver beispielsweise dadurch nachweisen, dass sie Daten mit ihrem Private Key signiert, der das Gegenstück zu einem dem Bestätigungsserver bekannten Public Key darstellt.

Aus Gründen der Nutzerfreundlichkeit kann ein derartiger Nachweis der Authentizität der Mobile App über den beschriebenen Informationskreislauf auch nur einmalig im Rahmen der Installation der Mobile App durchzuführen sein und nicht jedes Mal bei einem Onlineeinkauf. In diesem Fall startet der Nutzer den Download der erfindungsgemäßen Mobile App vorzugsweise von einer vertrauenswürdigen Webseite, in die diejenige Webseite (zum Beispiel Google Playstore) von der aus die Mobile App heruntergeladen wird, als iframe eingebettet ist.

Am Ende des App Installationsprozesses schaltet die Mobile App in einen QR-Scanning Modus, und der Nutzer wird aufgefordert, den auf der vertrauenswürdigen Webseite dargestellten QR Code einzuscannen. Der QR Code übermittelt der Mobile App eine Websession ID, über die die Mobile App eine Websession mit der vertrauenswürdigen Webseite aufbauen und sich anschließend mittels digitaler Signatur authentifizieren kann. Mit dem auf der vertrauenswürdigen Webseite angezeigten Authentifizierungsergebnis, auch "remote attestation" genannt, kann der Nutzer die Echtheit der heruntergeladenen Mobile App prüfen.

Um dem Nutzer die Echtheit der heruntergeladenen Mobile App auch über ihren weiteren Lebenszyklus hinweg aufzeigen zu können, wird der Nutzer nach Installation der Mobile App aufgefordert auf den Touch Screen des Smartphones z.B. mit dem Finger eine beliebige Figur zu zeichnen oder etwas zu schreiben. Diese Signatur wird im Weiteren immer dann von der Mobile App als Hintergrundbild dargestellt, wenn die Mobile App im Trusted Execution Environment (TEE) Modus arbeitet, also zum Beispiel den Bezahlbetrag zur Beauftragung anzeigt oder die Karten-PIN abfragt.

Die Kommunikation zwischen der Mobile App und dem Bestätigungsserver kann zudem verschlüsselt sein.

Die Transaktionsdaten lassen sich fälschungssicher von der Webseite an die Mobile App übertragen, indem das Plug-in Softwaremodul im Wesentlichen nur eine Transaktionsnummer auf der Webseite darstellt und der Mobile App die eigentlichen Transaktionsdaten über den Bestätigungsserver, zugeordnet zur Transaktionsnummer bereitstellt.Vorrichtungs- bzw. Systemaspekte der vorliegenden Erfindung ergeben sich weitgehend aus den vorstehend erläuterten Verfahrensaspekten und werden insoweit hier nicht wiederholt. Es wird darauf hingewiesen, dass auch hier Konfigurationen eingeschlossen sind, bei der eine vom Nutzerendgerät separate Smartcard oder eine in das Nutzerendgerät eingeschlossene Smartcard-Komponente zum Einsatz kommen.

Vorteile und Zweckmäßigkeiten der Erfindung ergeben sich im Übrigen aus der nachfolgenden Beschreibung eines Ausführungsbeispiels und von Ausführungsaspekten der Erfindung anhand der Figuren. Von diesen zeigen:
Fig. 1 eine schematische Darstellung einer erfindungsgemäßen Anordnung,
Fig. 2 eine weitere schematische Darstellung der erfindungsgemäßen Anordnung,
Fig. 3 einen Teilaspekt einer Ausgestaltung der in Fig. 1 und 2 dargestellten Anordnung,
Fig. 4A bis 4E einen weiteren Teilaspekt einer Ausgestaltung der in Fig. 1 und 2 dargestellten Anordnung und
Fig. 5 eine schematische Darstellung einer weiteren erfindungsgemäßen Anordnung.

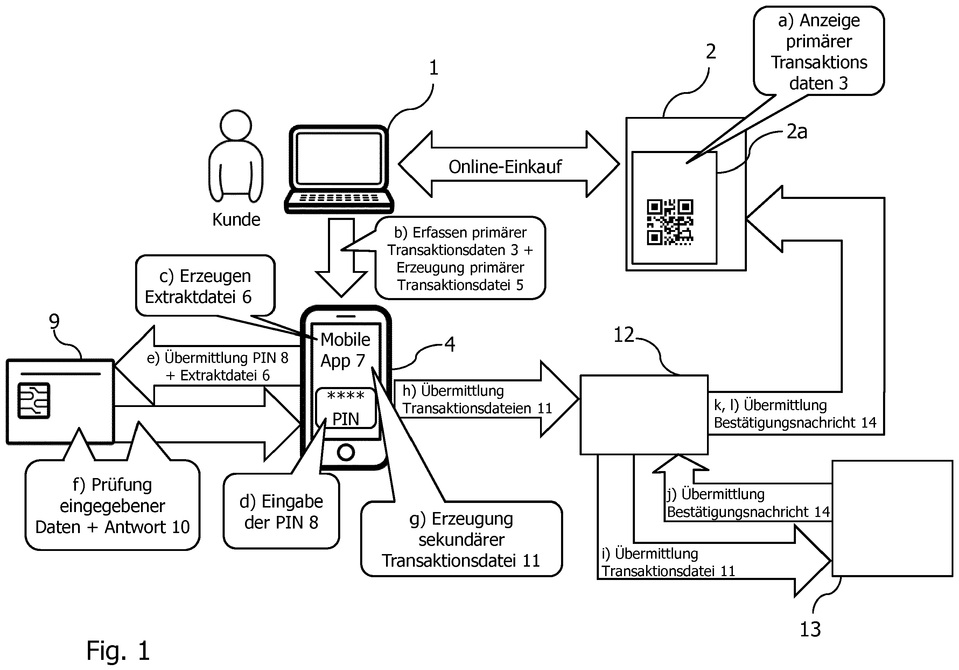

Die Erfindung löst die Aufgabe durch ein Verfahren zur Autorisierung und Durchführung einer Transaktion, das gemäß Fig. 1 in einer vorteilhaften Ausführung und vereinfachten Formulierung folgende Schritte aufweist:
a) Darstellung von (primären) Transaktionsdaten 3 auf einer Webseite 2, gesteuert durch ein Plug-in Softwaremodul 2a, auf dem Anzeigeschirm eines von einem Kunden bei einem Online-Einkauf genutzten Computers 1;
b) Automatisches Erfassen der Transaktionsdaten 3 zur Erzeugung einer primären Transaktionsdatei 5 durch ein Smartphone 4 des Benutzers und Anzeige der primären Transaktionsdatei 5 auf demselben;
c) Verarbeitung der primären Transaktionsdatei 5 auf dem Smartphone 4 zur Extraktion mindestens eines Teils der Transaktionsdaten und Erzeugung einer Extraktdatei 6 mittels einer im Smartphone 4 installierten Mobile App 7,
d) Eingabe einer PIN 8 einer als SmartCard 9 konfigurierten und mit Mitteln zur drahtlosen Nahbereichs-Datenübertragung ausgerüsteten Debit- oder Kreditkarte am Smartphone 4 und Verknüpfung der PIN mit der Extraktdatei 6,
e) Übermittlung der Extraktdatei 6 und der verknüpften PIN 8 vom Smartphone 4 an die mit diesem drahtlos verbundene Smartcard 9,
f) Prüfung der Extraktdatei 6 in Verbindung mit der PIN 8 durch einen Prozessor der SmartCard 9 aufgrund von dort gespeicherten Vergleichsdaten und, bei Korrektheit, Ausgabe einer Korrektheit-Bestätigungsnachricht 10 an das Smartphone 4,
g) Erzeugung einer sekundären Transaktionsdatei 11, die die primären Transaktionsdaten und Nutzerdaten umfasst, im Smartphone 4 aufgrund der Bestätigungsnachricht 10
h) Übermittlung der sekundären Transaktionsdatei 11 vom Smartphone 4 über das Zugangsnetz an einen Zugangs-/Bestätigungs-Server 12 im Datennetz,
i) Weiterleitung der sekundären Transaktionsdatei 11 vom Zugangs-/Bestätigungs-Server 12 an ein Serversystem 13 im Datennetz,
j) Erzeugung einer Transaktions-Bestätigungsnachricht 14 nach Verarbeitung der sekundären Transaktionsdatei 11 zur Ausführung der Transaktion im Serversystem 13,
k) Abholen der Transaktions-Bestätigungsnachricht 14 durch eine Anbieter-Software;
l) Empfang der Transaktions-Bestätigungsnachricht 14 vom Zugangs-/Bestätigungs-Server 12 an einer (nicht gezeigten) Anbieter-Empfangseinrichtung und optische und/oder akustische Anzeige der Nachricht auf der Anbieter-Website 2.

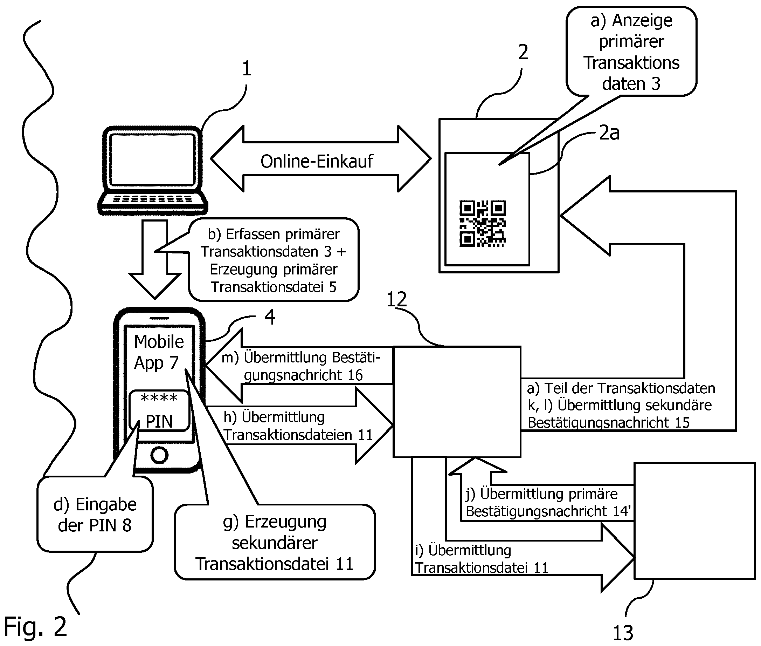

Fig. 2 stellt detaillierter die im Zusammenhang mit der Autorisierung der Transaktion und Bestätigung von deren Durchführung stehenden Kommunikationsschritte dar. Hierbei ist vorgesehen, dass das Smartphone 4 und das Serversystem 13 zumindest einen Teil der Daten in der Transaktionsdatei 11 und der (primären) Bestätigungsnachricht 14' verschlüsselt und digital signiert kommunizieren und der Zugangs-/Bestätigungsserver 12 aus dieser Kommunikation trotzdem herauslesen kann, ob das Serversystem 13 die Ausführung der Transaktion bestätigt, und diese Information als sekundäre Bestätigungsnachricht 15 an das Plug-in Softwaremodul 2a sendet.

Das ist insbesondere so ausgestaltet, dass das Plug-in Softwaremodul 2a den Zugangs-/Bestätigungsserver 12 zum Zeitpunkt der Darstellung der Transaktionsdaten 3 auf der Webseite 2 schon mit einem Teil der Transaktionsdaten versorgt und der Zugangs-/Bestätigungsserver 12 die sekundäre Bestätigungsnachricht 15 später zu diesem anfangs empfangenen Teil der Transaktionsdaten 3 zuordnen kann.

Von dem in Fig. 1 dargestellten Ablauf unterscheidet sich der Ablauf nach Fig. 2 auch dadurch, dass nach dem Empfang der primären Bestätigungsnachricht 14' der Zugangs-/Bestätigungsserver 12 eine Bestätigungsnachricht 16 zum Empfang und zur Anzeige im Smartphone 4 generiert und über das Zugangsnetz direkt an dieses aussendet (Schritt m)).

Wenn das erfindungsgemäße Verfahren in einen Mobile Commerce Prozess eingebettet wird, entfällt die Verwendung eines Computers 1 und der erfindungsgemäße Schritt a), in welchem die primären Transaktionsdaten 3 auf der Webseite 2 grafisch, zum Beispiel als QR-Code, dargestellt werden. Der Schritt b) ändert sich in diesem Fall derart, dass die primären Transaktionsdaten 3 nicht mehr vom Smartphone 4 eingescannt werden müssen, sondern im Rahmen einer Datenkommunikation von der Webseite 2 an einen im Smartphone befindlichen Browser übergeben werden.

Wenn der Online Händler das erfindungsgemäße Bezahlverfahren nicht augenfällig für alle Käufer auswählbar machen will, weil nur ein Teil der Käufer mit erfindungsgemäßen Smartphones 4 und Smartcards 9 ausgestattet sind, kann die Mobile Commerce Variante des erfindungsgemäßen Bezahlverfahrens auch in ein bereits etabliertes Bezahlsystem integriert werden.

In diesem Fall kann die Eingangswebseite des etablierten Bezahlsystems ein JavaScript umfassen, das auf den Smartphone Browser geladen wird und dort den User Agent String erfasst und, falls dieser auf einen Android basierten Chrome Browser hindeutet, den Browser auf eine neue Webseite leitet, auf der der Nutzer den weiteren Verlauf mit einem Menütastendruck bestätigen muss. Anschließend gibt die neue Webseite eine derart gestaltete URL an den Chrome Browser zurück, dass dieser entweder per Android Intent Call zum Öffnen einer auf dem Smartphone installierten, erfindungsgemäßen Mobile App 7 veranlasst, oder, falls dies nicht möglich ist, auf die Eingangsseite des etablierten Bezahlsystems weitergeleitet wird.

Das etablierte Bezahlverfahren wird ebenfalls dann angewendet, wenn das JavaScript der Eingangswebseite aufgrund des ermittelten User Agent Strings zu dem Schluss kommt, dass der verbundene Browser kein Android basierter Chrome Browser ist.

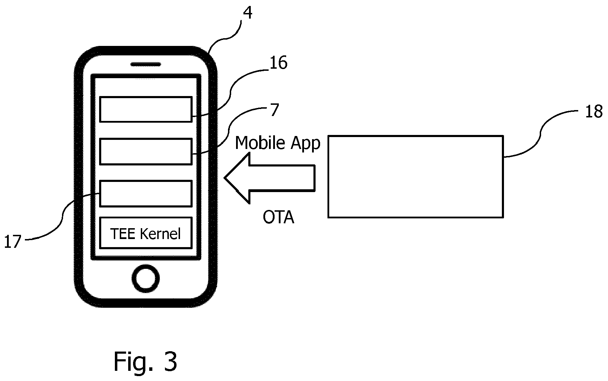

In Fig. 3 ist schematisch dargestellt, dass die Mobile App 7 auf dem Smartphone in einem Trusted Execution Environment 16 läuft und darüber gesichert bestimmte Hardware Ressourcen 17, wie die Tastatur, das Display und den NFC Controller des Smartphones, ansteuert. Hierbei enthält das Smartphone 4 als Teil der Hardware Ressourcen 17 einen Geräteschlüssel, mit welchem sich das Smartphone authentifiziert. Der Geräteschlüssel ist im Sinne der Public Key Infrastructure (PKI) ein Private Key.

Vor Ausführung des Verfahrens wird die Mobile App von einem App-Ladesystem 18 im Over-The-Air Verfahren OTA in das Trusted Execution Environment 16 des Smartphones 4 geladen, nachdem sich das Smartphone mittels seines Geräteschlüssels gegenüber dem App-Ladesystem 18 authentifiziert hat.

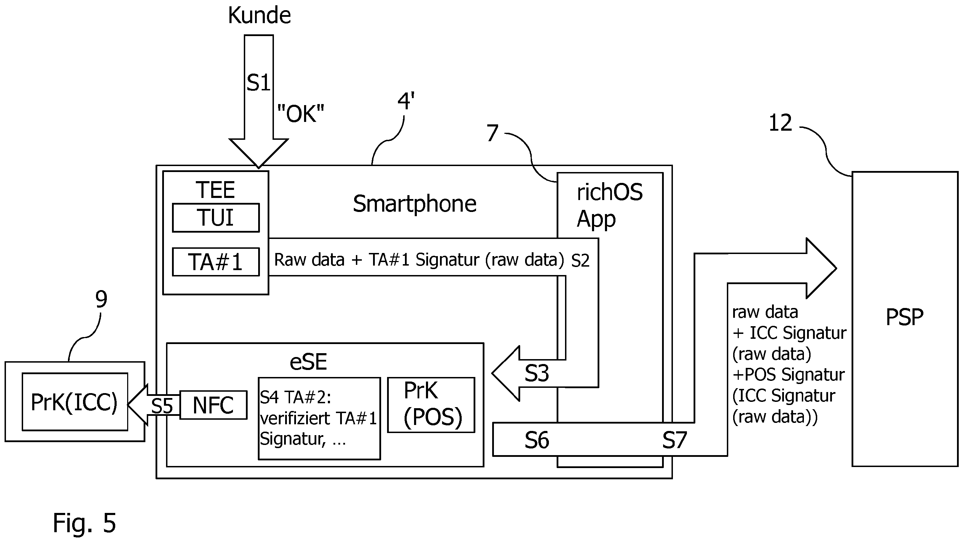

Fig. 5 zeigt eine Implementierung der Mobile App auf Samsung S6 und S7 Smartphones, wobei auf die Bezugsziffern für die Komponenten aus Fig. 1-3 zurückgegriffen wird und die wesentlichen Schritte des Ablaufs mit S1... S7 bezeichnet sind. Die Mobile App 7 ist in drei Teile aufgeteilt, einen richOS Android Teil, einen Trusted App #1 Teil (TA#1), der auf dem Trusted Execution Environment läuft, und einen Trusted App #2 Teil (TA#2), der auf dem embedded Secure Element (eSE) läuft.

Die Hauptaufgabe der TA#1 ist die Bereitstellung eines sicheren User Interfaces, über das die korrekten Bezahldaten angezeigt werden und die Karten-PIN abhörsicher eingegeben wird.

Die Hauptaufgabe der TA#2 ist die gesicherte Kommunikation mit den peripheren Komponenten, der Smartcard 9 und dem Bestätigungs-Server (PSP) 12 und dem Serversystem 13, mit kryptografischen Schlüsseln, die im Rahmen des Mobile App Installationsprozesses auf das eSE geladen werden und von dort aus fortan geschützt arbeiten.

Die Kommunikation zwischen beiden Trusted Apps läuft über den unsicheren Teil der Mobile App, den richOS Android Teil der App. Damit die Karten-PIN dabei nicht ausgespäht werden kann, wenn sie von TA#1 an TA#2 übertragen wird, verschlüsselt sie TA#1 mit dem public key der TA#2. Damit die dem Nutzer angezeigten und von ihm bestätigten Bezahldaten nachträglich nicht mehr verfälscht werden können, werden sie in der TA#1 digital signiert und in der TA#2 vor der Kommunikation an die Smartcard auf Integrität verifiziert. Bevorzugt ist zur Erhöhung der Sicherheit die Mobile App 7 auf die Kommunikation mit ausgewählten, dem Benutzer zugeordneten Smartcards 9 eingeschränkt. Die Mobile App könnte in diesem Fall nicht mit beliebigen anderen Smartcards kommunizieren und über sie Zahlungen auslösen.

Der Benutzer registriert die Smartcard 9 gegenüber der Mobile App 7 als eine ihm zugeordnete derart, dass vor der ersten Benutzung der Smartcard das hinter der Smartcard liegende Bankkonto in die Mobile App eingegeben, dann der Verwendungszweck einer automatisch auf diesem Konto eingehenden Überweisung abgelesen und schließlich zur Authentifizierung in die Mobile App eingegeben werden muss.

Alternativ zu diesem für den Benutzer recht aufwendigen Prozess kann die Mobile App aus Gründen der Sicherheit über ihren gesamten Lebenszyklus auf die Nutzung einer bestimmten Anzahl von Smartcards beschränkt werden, indem der Bestätigungsserver 12, über den die Transaktionsdateien 11 laufen, die Kombinationen der IDs der Mobile App 7 und Karten9 überwacht und eine Transaktionsdatei 11 stoppt, wenn sie von einer Karte 9 signiert wurde, die das zulässige Kontingent an maximal einer Mobile App 7 zuordenbarer Karten übersteigt.

Beim vorgeschlagenen Verfahren stellen sich besondere Sicherheitsanforderungen an das Smartphone, das in der Funktion eines Kassenterminals in der Kommunikationskette zwischen Nutzer, Karte und Bank des Händlers an zentraler Stelle steht. Die erfindungsgemäße Lösung muss zum Beispiel verhindern, dass die Karten-PIN durch eine Schadsoftware auf dem Smartphone ausspioniert werden kann und dass das Smartphone nicht einen anderen als den angezeigten und vom Benutzer freigegebenen Betrag und Empfänger zur Zahlung anweist.

Die Erfindung löst die Sicherheitsanforderungen an das Smartphone insbesondere durch den Einsatz eines sogenannten Trusted Execution Environments (TEE). Im Rahmen eines TEE kann das Smartphone über einen Prozessor verfügen, dessen Rechenregister in einem normalen und einem sicheren Modus arbeiten kann. Im sicheren, erfindungsgemäßen Modus können Betriebssystemfunktionen, wie zum Beispiel die gesicherte Anzeige des Betrages und Empfängers und Eingabe der PIN, ausgeführt werden, die im normalen Modus nicht zur Verfügung stehen. Das Register wird durch die erfindungsgemäße Mobile App in den sicheren Modus umgeschaltet, nachdem sich die Mobile App durch ein Public Key Verfahren gegenüber dem Register als sichere Mobile App authentifiziert hat.

Diese Eingabe der Girocard PIN über das Smartphone bedeutet ein besonderes Sicherheitsrisiko, weil die Girocard PIN eine zentrale Funktion erfüllt, wie z.B. zum Abheben von Bargeld und Bezahlen im Geschäft, und korrumpierte PINs einen enormen Schaden verursachen könnten. Andererseits bieten Smartphones potentiellen Angreifern eine größere Angriffsfläche als in ihrer Funktion beschränktere Kassenterminals. Es sind deshalb besondere Sicherheitsmaßnahmen erforderlich, um eine über das Smartphone eingegebene PIN vor dem Ausspähen zu schützen.

Schadsoftware (Malware) auf dem Smartphone könnte die Kommunikation zwischen dem Betriebssystem des Smartphones und der Mobile App abhören, wenn die PIN über die vorgegebene Tastatur des Smartphones eingegeben wird.

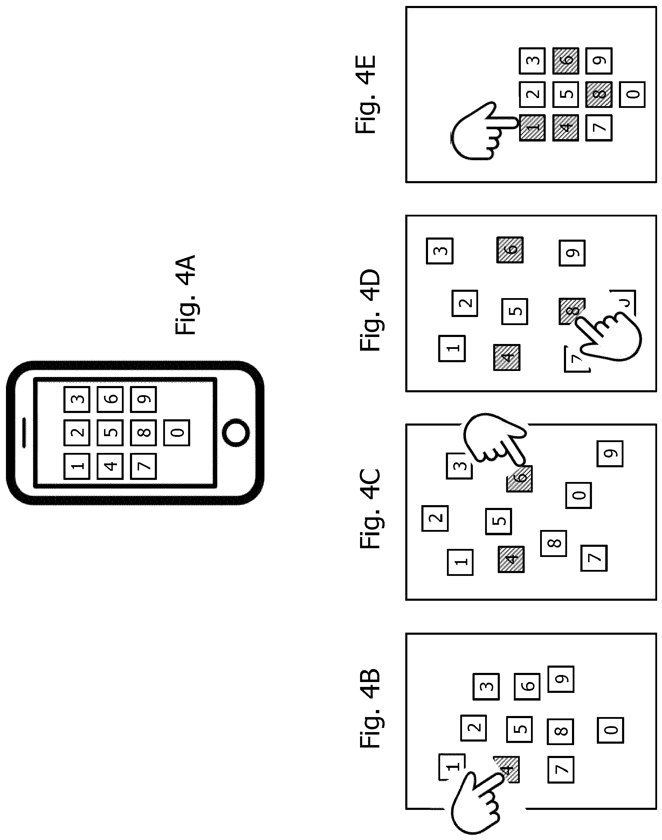

Eine besonders ausgestaltete Mobile App bietet dem Kunden ein eigenes PIN Eingabe Tastaturfeld auf dem Touch-Display, das sich vom Standard Tastaturfeld des Smartphone Betriebssystems unterscheidet, wie nachfolgend unter Bezugnahme auf Fig. 4A bis 4E erläutert.

Wenn das Tastaturfeld statisch eingeblendet würde, könnte die Schadsoftware aufgrund der 4 berührten Punkte auf dem Display ein Muster erkennen, das auf die PIN schließen lässt. Das Tastaturfeld wird deshalb vorteilhafterweise
a) für jeden Kunden,
b) für jede PIN Eingabe, oder sogar
c) für jede einzelne PIN Zahl
anders auf dem Touch-Display eingeblendet.

Eine andere Einblendung des Tastaturfeldes kann bedeuten, dass
1. das gesamte Tastaturfeld oder einzelne Zahlenfelder unterschiedlich groß dargestellt werden,
2. das gesamte Tastaturfeld oder einzelne Zahlenfelder leicht rotiert werden
3. das gesamte Tastaturfeld oder einzelne Zahlenfelder nach links/rechts und oben/unten verschoben werden.

Weitere Ausgestaltung: Wenn sich die PIN Eingabe Tastatur vor der Eingabe jeder PIN Zahl an einen anderen Ort auf dem Display verschiebt, könnte das denjenigen Kunden Erinnerungsschwierigkeiten bereiten, die sich die PIN mittels eines graphischen Eingabemusters auf dem Display merken. Um den Kunden aufzuzeigen, welche Tasten sie bereits gedrückt haben, könnten die bereits gedrückten Tasten auf der Tastatur speziell markiert werden. Zudem könnte graphisch angezeigt werden, wie viele der 4 Zahlen bereits eingegeben wurden.

Weitere Ausgestaltung: Um einer Schadsoftware die Analyse des eingeblendeten Displaybildes und damit die Position der Tastatur zu erschweren, könnte man sich zudem der Mechanismen von Webseiten bedienen, die mit der Anzeige von bildhaft angezeigten, manuell einzugebenden Zifferncodes maschinelle Denial-of-Service Angriffe abwehren. Das heißt auf die Darstellung des erfindungsgemäßen Tastaturfeldes übertragen, dass Striche und Zahlen nicht über XML Funktionen sondern als Bilder eingeblendet werden.

Weitere Ausgestaltung: Während das Tastaturfeld in den oberen Ausgestaltungen zwar verzerrt aber in seiner Zahlenanordnungsstruktur belassen wird, kann in einer weiteren Ausgestaltung auch die Zahlenbelegung auf den Tastaturfeld beliebig gemischt werden. Für Kunden, die sich die PIN mittels eines graphischen Eingabemusters auf dem Display merken, würde eine andere Zahlenbelegung allerdings einen Nachteil bedeuten.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Verfahren zur Übermittlung von Transaktionsdaten unter Nutzung eines öffentlichen Datennetzes, mit den Schritten:
a) Übermittlung primärer Transaktionsdaten von einer Anbieter-Datenbasis über das öffentliche Datennetz an ein an das Datennetz angeschlossenes Anzeigegerät und lokale optische und/oder akustische Anzeige der primären Transaktionsdaten an diesem, insbesondere optisch auf einer angezeigten Anbieter-Website als Barcode oder QR-Code,
b1) Aufnahme der Anzeige und Erzeugung einer primären Transaktionsdatei in einem Nutzerendgerät eines Zugangsnetzes oder
b2) Aufnahme der Anzeige und Erzeugung einer primären Transaktionsdatei in einem Aufnahmegerät und anschließendes Übertragen der primären Transaktionsdatei an ein Nutzerendgerät eines Zugangsnetzes, über Mittel zur drahtlosen Nahbereichs-Datenübertragung des Aufnahmegerätes und Nutzerendgerätes,
c) Verarbeitung der primären Transaktionsdatei auf dem Nutzerendgerät zur Extraktion mindestens eines Teils der Transaktionsdaten und Erzeugung einer Extraktdatei,
d) Eingabe eines Autorisierungsdatensatzes, insbesondere einer PIN, einer als SmartCard konfigurierten und mit Mitteln zur drahtlosen Nahbereichs-Datenübertragung ausgerüsteten Debit- oder Kreditkarte am Nutzerendgerät und Verknüpfung des Autorisierungsdatensatzes mit der Extraktdatei,
e1) Übermittlung der Extraktdatei und des verknüpften Autorisierungsdatensatzes vom Nutzerendgerät an die mit diesem drahtlos verbundene Smartcard oder
e2) interne Übergabe der Extraktdatei und des verknüpften Autorisierungsdatensatzes an die SmartCard-Komponente im Nutzerendgerät,
f) Prüfung der Extraktdatei in Verbindung mit dem Autorisierungsdatensatz durch einen Prozessor der SmartCard oder SmartCard-Komponente aufgrund von dort gespeicherten Vergleichsdaten und, bei Korrektheit, Ausgabe einer Korrektheit-Bestätigungsnachricht an das Nutzerendgerät bzw. intern im Nutzerendgerät,
g) Erzeugung einer sekundären Transaktionsdatei, die die primären Transaktionsdaten und Nutzerdaten umfasst, im Nutzerendgerät aufgrund der Bestätigungsnachricht
h) Übermittlung der sekundären Transaktionsdatei vom Nutzerendgerät über das Zugangsnetz an einen Zugangs-Server im Datennetz,
l) Abholen oder Empfang einer Transaktions-Bestätigungsnachricht vom Zugangs-Server durch eine bzw. an einer Anbieter-Empfangseinrichtung und insbesondere optische und/oder akustische Anzeige der Nachricht auf der Anbieter-Website.

2. Verfahren zur Übermittlung von Transaktionsdaten unter Nutzung eines öffentlichen Datennetzes, mit den Schritten:
b') Übermittlung primärer Transaktionsdaten von einer Anbieter-Datenbasis über das öffentliche Datennetz an ein an das Datennetz angeschlossenes Nutzerendgerät eines Zugangsnetzes und Erzeugung einer primären Transaktionsdatei in dem Nutzerendgerät,
c) Verarbeitung der primären Transaktionsdatei auf dem Nutzerendgerät zur Extraktion mindestens eines Teils der Transaktionsdaten und Erzeugung einer Extraktdatei,
d) Eingabe eines Autorisierungsdatensatzes, insbesondere einer PIN, einer als SmartCard konfigurierten und mit Mitteln zur drahtlosen Nahbereichs-Datenübertragung ausgerüsteten Debit- oder Kreditkarte am Nutzerendgerät und Verknüpfung des Autorisierungsdatensatzes mit der Extraktdatei,
e1) Übermittlung der Extraktdatei und des verknüpften Autorisierungsdatensatzes vom Nutzerendgerät an die mit diesem drahtlos verbundene Smartcard oder
e2) interne Übergabe der Extraktdatei und des verknüpften Autorisierungsdatensatzes an die SmartCard-Komponente im Nutzerendgerät,
f) Prüfung der Extraktdatei in Verbindung mit dem Autorisierungsdatensatz durch einen Prozessor der SmartCard oder SmartCard-Komponente aufgrund von dort gespeicherten Vergleichsdaten und, bei Korrektheit, Ausgabe einer Korrektheit-Bestätigungsnachricht an das Nutzerendgerät bzw. intern im Nutzerendgerät,
g) Erzeugung einer sekundären Transaktionsdatei, die die primären Transaktionsdaten und Nutzerdaten umfasst, im Nutzerendgerät aufgrund der Bestätigungsnachricht
h) Übermittlung der sekundären Transaktionsdatei vom Nutzerendgerät über das Zugangsnetz an einen Zugangs-Server im Datennetz,
I) Abholen oder Empfang einer Transaktions-Bestätigungsnachricht vom Zugangs-Server durch eine bzw. an einer Anbieter-Empfangseinrichtung und insbesondere optische und/oder akustische Anzeige der Nachricht auf der Anbieter-Website.

3. Verfahren nach Anspruch 1 oder 2, wobei zwischen den Schritten h) und I) die folgenden Schritte ausgeführt werden:
i) Weiterleitung der sekundären Transaktionsdatei vom Zugangs-Server an einen Transaktions-Server oder ein Serversystem im Datennetz,
j) Erzeugung einer Transaktions-Bestätigungsnachricht nach Verarbeitung der sekundären Transaktionsdatei zur Ausführung der Transaktion im Transaktions-Server oder Serversystem,
k) Abholen der Transaktions-Bestätigungsnachricht durch eine Anbieter-Software oder aktive Aussendung der Transaktions-Bestätigungsnachricht vom Transaktions-Server oder Serversystem an die Anbieter-Empfangseinrichtung.

4. Verfahren nach einem der Ansprüche 1 bis 3, mit einem weiteren Schritt m) Übermittlung der Transaktions-Bestätigungsnachricht über den Zugangs-Server und das Zugangsnetz an das Nutzerendgerät des Zugangsnetzes und Anzeige auf diesem.

5. Verfahren nach einem der vorangehenden Ansprüche, wobei das Zugangsnetz ein Mobilfunknetz oder WLAN und das Nutzerendgerät ein Smartphone oder Tablet ist, in dem eine Mobile App zur Ausführung insbesondere der Schritte c) - e2) und g) installiert ist und im Schritt e2) die Mobile App den Autorisierungsdatensatz im Vergleich mit einem Secure Element auf einer SIM-Karte des Nutzerendgerätes prüft.

6. Verfahren nach einem der vorangehenden Ansprüche, wobei zur Ausgabe der PIN der Debit- oder Kreditkarte ein proprietäres Eingabefeld auf dem Touchscreen des Nutzerendgerätes erzeugt wird, wobei insbesondere die Position des Eingabefeldes auf dem Touchscreen für jeden Eingabevorgang oder für einzelne Ziffern-Eingaben eines Eingabevorganges spezifisch vorgegeben wird.

7. Verfahren nach einem der vorangehenden Ansprüche, wobei die im Nutzerendgerät ausgeführten Schritte im Rahmen eines Trusted Execution Environment, TEE, durch einen Prozessor des Nutzerendgerätes in einem sicheren Modus ausgeführt werden, wobei die Mobile App sich gegenüber dem Prozessor des Nutzerendgerätes insbesondere durch ein Public Key Verfahren als sichere Mobile App authentifiziert und wobei die Umschaltung in den sicheren Modus durch die Mobile App bewirkt wird.

8. Verfahren nach einem der vorangehenden Ansprüche, wobei die Transaktionsdaten im Wesentlichen nur eine Transaktionsnummer beinhalten und das Nutzerendgerät vor Erstellung der Extraktdatei in Schritt c) die restlichen Transaktionsdaten über den Transaktions-Server, zugeordnet zur Transaktionsnummer, bezieht.

9. Verfahren nach einem der Ansprüche 5 bis 8, wobei die Mobile App ihre Authentizität dem Nutzer gegenüber dadurch nachweist, dass das Plug-in Softwaremodul dem Nutzer eine Warnmeldung zeigt, wenn das Plug-in Softwaremodul eine bestimmte Zeit nach Darstellung der Transaktionsdaten auf der Anbieter-Website keine Rückmeldung vom Transaktions-Server erhalten hat, dass die Transaktionsdaten von einer authentischen Mobile App erfasst wurden.

10. Verfahren nach einem der Ansprüche 5 bis 9, wobei sich die Mobile App gegenüber dem Transaktions-Server durch ein Public Key Verfahren authentifiziert und/oder die Mobile App und der Transaktions-Server verschlüsselt miteinander kommunizieren.

11. Verfahren nach einem der vorangehenden Ansprüche, wobei Schritt I) und optional Schritt k) mindestens teilweise über eine Bestätigungs-Funktionalität des Zugangsservers unabhängig vom aktuellen Betriebszustand des Nutzerendgerätes ausgeführt werden.

12. Anordnung zur Übermittlung von Transaktionsdaten unter Nutzung eines öffentlichen Datennetzes von einer Anbieter-Datenbasis, in der primäre Transaktionsdaten gespeichert sind oder erzeugt werden, wobei die Anordnung aufweist:
- ein an das öffentliche Datennetz angeschlossene Anzeigegerät zur lokalen optischen und/oder akustischen Anzeige der primären Transaktionsdaten,
- ein an ein Zugangsnetz des öffentlichen Datennetzes angeschlossenes Nutzerendgerät, mit Aufnahmemitteln zur Aufnahme der primären Transaktionsdaten vom Anzeigegerät und Mitteln zur drahtlosen Nahbereichs-Datenübertragung,
- eine als Smartcard konfigurierte Debit- oder Kreditkarte mit Mitteln zur drahtlosen Nahbereichs-Datenübertragung und einem Prozessor zur Prüfung empfangener Daten, die einen Autorisierungsdatensatz der Smartcard umfassen, aufgrund von in der Smartcard gespeicherten Vergleichsdaten und, bei Korrektheit, Ausgabe einer Korrektheit-Bestätigungsnachricht,
- einer auf dem Nutzerendgerät installierten Mobile App zur Erzeugung und Verarbeitung einer primären Transaktionsdatei zur Extraktion mindestens eines Teils der primären Transaktionsdaten und Erzeugung einer Extraktdatei sowie Verknüpfung dieser mit einem am Nutzerendgerät eingegebenen Autorisierungsdatensatz, Übermittlung der Extraktdatei und des verknüpften Autorisierungsdatensatzes vom Nutzerendgerät an die drahtlos mit diesem verbundene Smartcard, Erzeugung einer sekundären Transaktionsdatei, die die primären Transaktionsdaten und Nutzerdaten umfasst, im Nutzerendgerät aufgrund der Korrektheit-Bestätigungsnachricht und Übermittlung der sekundären Transaktionsdatei vom Nutzerendgerät über das Zugangsnetz an einen Zugangs-Server im Datennetz,
- einen an das Zugangsnetz und das Datennetz angeschlossenen Zugangs-Server zum Empfang der sekundären Transaktionsdatei und Erzeugung und Übermittlung einer Autorisierungs-Bestätigungsnachricht an einer Anbieter-Empfangseinrichtung.

13. Anordnung nach Anspruch 12, wobei die Mittel zur Nahbereichs-Datenübertragung gemäß dem Near Field Communication, NFC, Protokoll und dem EMV-Standard für chipbasierte Zahlungskarten konfiguriert sind.

14. Anordnung zur Übermittlung von Transaktionsdaten unter Nutzung eines öffentlichen Datennetzes von einer Anbieter-Datenbasis, in der primäre Transaktionsdaten gespeichert sind oder erzeugt werden, wobei die Anordnung aufweist:
- ein an das öffentliche Datennetz angeschlossene Anzeigegerät zur lokalen optischen und/oder akustischen Anzeige der primären Transaktionsdaten,
- ein an ein Zugangsnetz des öffentlichen Datennetzes angeschlossenes Nutzerendgerät, mit Aufnahmemitteln zur Aufnahme der primären Transaktionsdaten vom Anzeigegerät oder Mitteln zur Datenübertragung von einem separaten Aufnahmegerät,
- eine als Smartcard-Komponente im Nutzerendgerät konfigurierte Debit- oder Kreditkarte und einem Prozessor zur Prüfung empfangener Daten, die einen Autorisierungsdatensatz der Debit- oder Kreditkarte umfassen, aufgrund von in der Smartcard-Komponente im Nutzerendgerät gespeicherten Vergleichsdaten und, bei Korrektheit, Ausgabe einer Korrektheit-Bestätigungsnachricht,
- einer auf dem Nutzerendgerät installierten Mobile App zur Erzeugung und Verarbeitung einer primären Transaktionsdatei zur Extraktion mindestens eines Teils der primären Transaktionsdaten und Erzeugung einer Extraktdatei sowie Verknüpfung dieser mit einem am Nutzerendgerät eingegebenen Autorisierungsdatensatz, Übergabe der Extraktdatei und des verknüpften Autorisierungsdatensatzes im Nutzerendgerät an die interne Smartcard-Komponente, Erzeugung einer sekundären Transaktionsdatei, die die primären Transaktionsdaten und Nutzerdaten umfasst, im Nutzerendgerät aufgrund der Korrektheit-Bestätigungsnachricht und Übermittlung der sekundären Transaktionsdatei vom Nutzerendgerät über das Zugangsnetz an einen Zugangs-Server im Datennetz,
- einen an das Zugangsnetz und das Datennetz angeschlossenen Zugangs-Server zum Empfang der sekundären Transaktionsdatei und Erzeugung und Übermittlung einer Autorisierungs-Bestätigungsnachricht an eine Anbieter-Empfangseinrichtung.

15. Anordnung zur Übermittlung von Transaktionsdaten unter Nutzung eines öffentlichen Datennetzes von einer Anbieter-Datenbasis, in der primäre Transaktionsdaten gespeichert sind oder erzeugt werden, wobei die Anordnung aufweist:
- ein an ein Zugangsnetz des öffentlichen Datennetzes angeschlossenes Nutzerendgerät, mit Empfangsmitteln zum Empfang der primären Transaktionsdaten über das Datennetz,
- eine als Smartcard-Komponente im Nutzerendgerät konfigurierte Debit- oder Kreditkarte und einem Prozessor zur Prüfung empfangener Daten, die einen Autorisierungsdatensatz der Debit- oder Kreditkarte umfassen, aufgrund von in der Smartcard-Komponente im Nutzerendgerät gespeicherten Vergleichsdaten und, bei Korrektheit, Ausgabe einer Korrektheit-Bestätigungsnachricht,
- einer auf dem Nutzerendgerät installierten Mobile App zur Erzeugung und Verarbeitung einer primären Transaktionsdatei zur Extraktion mindestens eines Teils der primären Transaktionsdaten und Erzeugung einer Extraktdatei sowie Verknüpfung dieser mit einem am Nutzerendgerät eingegebenen Autorisierungsdatensatz, Übergabe der Extraktdatei und des verknüpften Autorisierungsdatensatzes im Nutzerendgerät an die interne Smartcard-Komponente, Erzeugung einer sekundären Transaktionsdatei, die die primären Transaktionsdaten und Nutzerdaten umfasst, im Nutzerendgerät aufgrund der Korrektheit-Bestätigungsnachricht und Übermittlung der sekundären Transaktionsdatei vom Nutzerendgerät über das Zugangsnetz an einen Zugangs-Server im Datennetz,
- einen an das Zugangsnetz und das Datennetz angeschlossenen Zugangs-Server zum Empfang der sekundären Transaktionsdatei und Erzeugung und Übermittlung einer Autorisierungs-Bestätigungsnachricht an eine Anbieter-Empfangseinrichtung.

16. Anordnung nach einem der Ansprüche 12 bis 15, wobei auf einer SIM-Karte des Nutzerendgerätes ein Secure Element zur Speicherung der Vergleichsdaten für den Autorisierungsdatensatz vorgesehen ist.

17. Anordnung nach einem der Ansprüche 12 bis 16, wobei der Zugangs-Server zur Übermittlung der Autorisierungs-Bestätigungsnachricht über das Zugangsnetz an das Nutzerendgerät ausgebildet ist.

18. Anordnung nach einem der Ansprüche 12 bis 17, wobei der Zugangs-Server zur Weiterleitung der sekundären Transaktionsdatei in das Datennetz ausgebildet ist und ein Transaktions-Server oder einem Serversystem im Datennetz zur Verarbeitung der sekundären Transaktionsdatei zur Ausführung der Transaktion und Erzeugung einer Transaktions-Bestätigungsnachricht vorgesehen ist.

19. Anordnung nach einem der Ansprüche 12 bis 18, wobei das Zugangsnetz ein Mobilfunknetz oder WLAN und das Nutzerendgerät ein Smartphone oder Tablet ist, in dem die Mobile App installiert ist, und die Mobile App zur Eingabe der PIN der Debit- oder Kreditkarte ein proprietäres Eingabefeld auf dem Touchscreen des Nutzerendgerätes ausgebildet ist, wobei insbesondere die Position des Eingabefeldes auf dem Touchscreen für jeden Eingabevorgang oder für einzelne Ziffern-Eingaben eines Eingabevorganges spezifisch vorgegeben wird.

20. Anordnung nach einem der Ansprüche 12 bis 19, wobei das Zugangsnetz ein Mobilfunknetz oder WLAN und das Nutzerendgerät ein Smartphone oder Tablet ist, in dem die Mobile App installiert ist, und das Nutzerendgerät einschließlich der Mobile App zum Betrieb in einem Trusted Execution Environment, TEE, ausgebildet sind und die Mobile App zur gesicherten Steuerung von Hardwarekomponenten des Nutzerendgerätes, insbesondere eines Prozessors desselben, ausgebildet ist.

21. Anordnung nach einem der Ansprüche 12 bis 20, wobei das Nutzerendgerät einen Geräteschlüssel zur Authentifizierung mindestens gegenüber einem App-Ladesystem, insbesondere einen Private Key im Sinne einer Public Key Infrastructure, PKI, aufweist.
